# EUROPÄISCHE PATENTANMELDUNG

(11) **EP 3 469 963 A1**
(43) Veröffentlichungstag der Anmeldung: **17.04.2019**
(21) Anmeldenummer: 18189577.2
(22) Anmeldetag: 17.08.2018
(51) Int. Cl.: A47J 31/44, A47J 31/40

(54) **HAUSGERÄTESYSTEM**

(30) Priorität: 11.10.2017 DE 102017218167
(71) Anmelder: BSH Hausgeräte GmbH, 81739 München (DE)
(72) Erfinder: Hahn, Delia, 89522 Heidenheim an der Brenz (DE); Baysal, Kudret, 2512AN Den Haag (NL); Spielmannleitner, Markus, 73479 Ellwangen (DE); Mack, Clemens, 89567 Sontheim (DE)

(57) **Zusammenfassung**

Die Erfindung geht aus von einem Hausgerätesystem, insbesondere einer Kaffeemaschine (10), mit zumindest einem Lebensmittelaufbewahrungsbehälter (20), welcher wenigstens einen Aufnahmeraum (22) für zumindest ein Lebensmittel definiert und welcher in zumindest einem Betriebszustand zu einer Abgabe zumindest eines Teils des Lebensmittels an eine Lebensmittelzubereitungseinheit vorgesehen ist, und mit zumindest einer Aufbereitungseinheit (50), welche dazu vorgesehen ist, zumindest einen Zustandsparameter des Aufnahmeraums (22) zu beeinflussen.

Um eine Lagerung von zumindest einem Lebensmittel in einem Hausgerätesystem weiter zu optimieren wird vorgeschlagen, dass die Aufbereitungseinheit (50) zumindest eine Atmosphäreneinheit (52) aufweist, welche dazu vorgesehen ist, einen Sauerstoffanteil in dem Aufnahmeraum (22) zu verändern.

## Beschreibung

Die Erfindung betrifft ein Hausgerätesystem nach dem Oberbegriff des Anspruchs 1 und ein Verfahren zur Lagerung von zumindest einem Lebensmittel nach dem Oberbegriff des Anspruchs 11.

Die Druckschriften US 2010/0199848 A1, DE 20 2010 010 600 U1 und EP 2 848 168 B1 offenbaren jeweils ein Hausgerätesystem nach dem Oberbegriff des Anspruchs 1, wobei das Hausgerätesystem zumindest eine Vakuumpumpe aufweist, wobei die Vakuumpumpe alle Bestandteile einer Gasatmosphäre zumindest im Wesentlichen gleichmäßig evakuiert.

Die Aufgabe der Erfindung besteht insbesondere darin, ein gattungsgemäßes Hausgerätesystem mit verbesserten Eigenschaften hinsichtlich einer Lagerung von Lebensmittel in einem Hausgerätesystem bereitzustellen. Die Aufgabe wird erfindungsgemäß durch die Merkmale der Patentansprüche 1 und 11 gelöst, während vorteilhafte Ausgestaltungen und Weiterbildungen der Erfindung den Unteransprüchen entnommen werden können.

Die Erfindung geht aus von einem Hausgerätesystem, insbesondere einer Kaffeemaschine, mit zumindest einem Lebensmittelaufbewahrungsbehälter, welcher wenigstens einen Aufnahmeraum für zumindest ein Lebensmittel definiert und welcher in zumindest einem Betriebszustand zu einer Abgabe zumindest eines Teils des Lebensmittels an eine Lebensmittelzubereitungseinheit vorgesehen ist, und mit zumindest einer Aufbereitungseinheit, welche dazu vorgesehen ist, zumindest einen Zustandsparameter des Aufnahmeraums zu beeinflussen.

Es wird vorgeschlagen, dass die Aufbereitungseinheit zumindest eine Atmosphäreneinheit aufweist, welche dazu vorgesehen ist, einen Sauerstoffanteil in dem Aufnahmeraum zu verändern.

Unter einem "Hausgerätesystem" soll insbesondere ein System verstanden werden, welches dazu vorgesehen ist, zumindest eine Eigenschaft eines Lebensmittels zu verändern und/oder zu erhalten. Vorteilhaft bildet die Kaffeemaschine zumindest im Wesentlichen das Hausgerätesystem. Insbesondere ist die Kaffeemaschine als Kaffeevollautomat und/oder als Kaffeefiltermaschine und/oder dergleichen ausgebildet.

Insbesondere kann das Hausgerätesystem zumindest ein Kältegerät aufweisen. Insbesondere ist das Kältegerät als Kühlschrank und/oder Gefriertruhe und/oder Kühlbox und/oder dergleichen ausgebildet. Vorteilhaft ist der Lebensmittelaufbewahrungsbehälter in zumindest einem Betriebszustand in dem Kältegerät angeordnet. Insbesondere ist der Lebensmittelaufbewahrungsbehälter in zumindest einem Betriebszustand mit dem Kältegerät gekoppelt.

Vorteilhaft ist unter einem "Lebensmittel" insbesondere ein Objekt zu verstehen, welches zu einer Aufnahme, insbesondere einem Verzehr, durch einen Nutzer vorgesehen ist. Insbesondere ist das Lebensmittel zumindest im Wesentlichen Kaffee. Unter einem "Lebensmittelaufbewahrungsbehälter" soll insbesondere ein Kaffeeaufbewahrungsbehälter verstanden werden, welcher insbesondere dazu vorgesehen ist, das Lebensmittel insbesondere im Aufnahmeraum aufzubewahren. Insbesondere weist der Lebensmittelaufbewahrungsbehälter einen Behältergrundkörper auf. Vorteilhaft weist der Lebensmittelaufbewahrungsbehälter, insbesondere zum Auffüllen, zumindest ein Deckelelement auf. Vorteilhaft ist das Deckelelement gegenüber dem Behältergrundkörper zumindest im Wesentlichen wasserdampfdicht und/oder gasundurchlässig, insbesondere Sauerstoffdicht, ausgebildet.

Darunter, dass der Lebensmittelaufbewahrungsbehälter zu einer "Abgabe" eines Lebensmittels an eine Lebensmittelzubereitungseinheit vorgesehen ist soll insbesondere verstanden werden, dass der Lebensmittelaufbewahrungsbehälter bei einer Abgabe in einem unmittelbaren Kontakt mit der Lebensmittelzubereitungseinheit steht. Besonders vorteilhaft ist der Lebensmittelzubereitungsbehälter zu einer Abgabe des Lebensmittels mit der Lebensmittelzubereitungseinheit gekoppelt. Insbesondere ist der Lebensmittelaufbewahrungsbehälter bei einer Abgabe mit der Kaffeemaschine gekoppelt. Insbesondere ist der Lebensmittelzubereitungsbehälter bei einer Abgabe des Lebensmittels von dem Kältegerät entkoppelt.

Unter einem "Aufnahmeraum" soll insbesondere ein räumlicher Bereich verstanden werden, welcher vorzugsweise von dem Lebensmittelaufbewahrungsbehälter begrenzt ist.

Unter einer "Aufbereitungseinheit" soll insbesondere eine Einheit verstanden werden, welche zumindest eine Gasatmosphäre, insbesondere die Gasatmosphäre des Aufnahmeraums und/oder der Umgebung, aufbereitet. Vorteilhaft ist die Aufbereitungseinheit mit dem Lebensmittelaufbewahrungsbehälter in zumindest einem Betriebszustand gekoppelt. Vorzugsweise ist die Aufbereitungseinheit in der Kaffeemaschine angeordnet, wobei insbesondere der Lebensmittelaufbewahrungsbehälter zu einem Aufbereiten mit der Kaffeemaschine gekoppelt ist. Alternativ und/oder zusätzlich ist die Aufbereitungseinheit in dem Kältegerät angeordnet, wobei der Lebensmittelaufbewahrungsbehälter zu einem Aufbereiten mit dem Kältegerät gekoppelt ist.

Bei dem Zustandsparameter handelt es sich vorzugsweise um eine Temperatur und/oder eine Zusammensetzung einer Gasatmosphäre in dem Aufnahmeraum. Unter einer "Gasatmosphäre" soll insbesondere eine Atmosphäre verstanden werden, welche zumindest eine Gaskomponente und/oder ein Gemisch aus zumindest zwei Gaskomponenten und/oder zumindest ein Wassergehalt aufweist. Vorzugsweise ist das Gasgemisch dazu vorgesehen, zumindest eine Eigenschaft des Lebensmittels, insbesondere eine Haltbarkeit und/oder eine Qualität und/oder ein Aroma und/oder ein Aussehen und/oder einen Geschmack und/oder einen Geruch und/oder eine Textur und/oder dergleichen, vorteilhaft zu verbessern und/oder zu erhalten.

Ferner soll unter einer "Atmosphäreneinheit" eine Einheit verstanden werden, welche zumindest eine Gaskomponente, insbesondere den Sauerstoffanteil der Gasatmosphäre verändert. Unter "verändern" soll insbesondere verstanden werden, dass eine Zusammensetzung und/oder ein Anteil der Gasatmosphäre, insbesondere eine Komponente der Gasatmosphäre, insbesondere um zumindest 10%, vorteilhaft um zumindest 40%, besonders vorteilhaft um zumindest 70% und besonders bevorzugt um zumindest 90% verringert und/oder erhöht wird. Insbesondere ist ein Anteil der Gaskomponente, insbesondere ein Sauerstoffanteil, in der Gasatmosphäre, insbesondere nach einem Verändern mittels der Atmosphäreneinheit, insbesondere maximal 10%, vorteilhaft höchstens 7%, besonders vorteilhaft maximal 5% und besonders bevorzugt höchstens 2%.

Insbesondere soll unter einer "Veränderung eines Sauerstoffanteils" eine Veränderung eines Anteils, insbesondere eines Massen- und/oder Volumenanteils, an Sauerstoff in der Gasatmosphäre insbesondere im Vergleich zu einer Umgebungsatmosphäre verstanden werden. Insbesondere weist die Atmosphäreneinheit zumindest eine Gaskompositionseinheit auf. Vorteilhaft ist die Gaskompositionseinheit dazu vorgesehen, eine Gaszusammensetzung in der Gasatmosphäre zu verändern, insbesondere im Vergleich zu einer Umgebungsatmosphäre. Insbesondere kann die Gaskompositionseinheit zumindest ein Vorratselement aufweisen, welches vorteilhaft in zumindest einem Betriebszustand zumindest ein Gas, insbesondere ein inertes Gas, enthält und zumindest dazu vorgesehen ist, das Gas dem Aufnahmeraum zuzuführen. Unter einem "inerten Gas" soll insbesondere ein reaktionsträges Gas verstanden werden, wie zum Beispiel Stickstoff und/oder Argon und/oder ein weiteres einem Fachmann als sinnvoll erscheinendes Gas.

Darunter, dass ein Element mit einem weiteren Element "gekoppelt" ist soll insbesondere eine Formschlussverbindung und/oder eine Kraftschlussverbindung verstanden werden, wie zum Beispiel durch zumindest ein Rastelverbindung und/oder ein Riegelverbindung und/oder eine Magnetverbindung, verstanden werden, welche insbesondere entkoppelbar ausgestaltet ist. Darunter soll insbesondere verstanden werden, dass der Lebensmittelaufbewahrungsbehälter von Hand, insbesondere ohne Hilfsmittel lösbar ist.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere erreicht werden, dass eine Qualität und/oder eine Haltbarkeit des Lebensmittels in dem Lebensmittelaufbewahrungsbehälter, insbesondere in dessen Aufnahmeraum, länger erhalten bleiben. Ferner kann vorteilhaft ein Aroma und/oder ein Geschmack des Lebensmittels verbessert werden. Zudem kann vorteilhaft die Lagerung von Kaffee und der eigentliche Brühprozess qualitätserhaltend in einem Gerät vereint werden. Darüber hinaus kann vorteilhaft die beabsichtigte Geschmacksbeeinflussung präziser beeinflusst werden. Ferner kann vorteilhaft eine sekundäre Haltbarkeitsdauer des Lebensmittels verlängert werden. Zudem kann vorteilhaft eine Oxidation des Lebensmittels durch Sauerstoff zumindest im Wesentlichen verhindert werden.

In einer weiteren Ausgestaltung der Erfindung wird vorgeschlagen, dass die Atmosphäreneinheit zumindest eine Feuchtigkeitseinheit aufweist, welche dazu vorgesehen ist, einen Wassergehalt im Aufnahmeraum zu beeinflussen. Insbesondere ist die Feuchtigkeitseinheit dazu vorgesehen, einen Wassergehalt in der Gasatmosphäre zu beeinflussen, insbesondere im Vergleich zu einer Umgebungsatmosphäre. Vorteilhaft ist die Feuchtigkeitseinheit dazu vorgesehen, einen Wassergehalt zu verringern. Hierdurch kann vorteilhaft ein Aroma des Lebensmittels erhalten bleiben. Darüber hinaus kann eine Temperatur vorteilhaft gesenkt werden, wobei vorteilhaft eine ausreichend trockene Luft im Aufnahmeraum erhalten bleibt, und insbesondere keine Feuchtigkeit induziert wird.

Ferner wird vorgeschlagen, dass die Feuchtigkeitseinheit und der Lebensmittelaufbewahrungsbehälter zumindest teilweise einstückig ausgebildet sind. Darunter, dass zwei Einheiten "zumindest teilweise einstückig" ausgebildet sind, soll insbesondere verstanden werden, dass die Einheiten zumindest eine gemeinsame Untereinheit aufweisen, welche Teil beider Einheiten ist und welche insbesondere eine Hauptfunktionseinheit zumindest einer der Einheiten und vorzugsweise beider Einheiten ist. Vorteilhaft ist die Feuchtigkeitseinheit zumindest teilweise einstückig mit dem Behältergrundkörper ausgebildet, wobei die Feuchtigkeitseinheit auf einer dem Aufnahmeraum zugewandten Seite angeordnet ist. Hierdurch kann vorteilhaft eine kompakte und/oder platzsparende Feuchtigkeitseinheit, insbesondere für das Hausgerätesystem, bereitgestellt werden. Ferner kann vorteilhaft möglichst einfach ein Wassergehalt in dem Aufnahmeraum beeinflusst werden.

Weiterhin wird vorgeschlagen, dass die Feuchtigkeitseinheit zumindest ein Entfeuchtungselement aufweist, welches wenigstens teilweise aus einem hygroskopischen Material besteht und zu einer Reduzierung des Wassergehalts im Aufnahmeraum vorgesehen ist. Unter einem "Entfeuchtungselement" soll insbesondere ein Element verstanden werden, welches dazu vorgesehen ist einen Wassergehalt in dem Aufnahmeraum und insbesondere in der Gasatmosphäre zu reduzieren, insbesondere im Vergleich zu einer Umgebungsatmosphäre. Insbesondere ist das Entfeuchtungselement einstückig mit dem Behältergrundkörper ausgebildet. Unter einem "hygroskopischen Material" soll insbesondere ein Material verstanden werden, welches dazu vorgesehen ist, einen Wassergehalt zumindest im Wesentlichen zu binden. Insbesondere ist das hygroskopische Material dazu vorgesehen, den Wassergehalt passiv zu reduzieren. Insbesondere bildet das hygroskopische Material zumindest teilweise den Behältergrundkörper. Vorteilhaft ist das hygroskopische Material zumindest teilweise an einer dem Aufnahmeraum zugewandten Seite angeordnet. Hierdurch kann vorteilhaft eine Entfeuchtung des Aufnahmeraums möglichst einfach bereitgestellt werden. Ferner kann ein Kostenaufwand vorteilhaft reduziert werden. Weiterhin kann ein Energieaufwand gesenkt werden. Drüber hinaus kann eine Temperatur vorteilhaft gesenkt werden, wobei vorteilhaft eine trockene Luft erhalten bleibt, und insbesondere keine Feuchtigkeit induziert wird.

Zudem wird vorgeschlagen, dass die Aufbereitungseinheit zumindest eine Kühleinheit aufweist, welche dazu vorgesehen ist, den Aufnahmeraum zu kühlen. Insbesondere ist die Kühleinheit dazu vorgesehen, den Lebensmittelaufbewahrungsbehälter zu kühlen. Insbesondere ist die Kühleinheit dazu vorgesehen, eine Temperatur insbesondere von maximal 10°C, vorzugsweise von höchstens 0°, vorteilhaft von maximal -18°C, besonders vorteilhaft von höchstens -40°C und besonders bevorzugt von maximal -80°C dem Aufnahmeraum bereitzustellen. Hierdurch kann vorteilhaft zumindest eine Haltbarkeit des Lebensmittels verbessert werden. Zudem kann vorteilhaft eine Lagerung bei Gefriertemperaturen bereitgestellt werden. Darüber hinaus kann vorteilhaft neben der Qualitätserhaltung des Kaffees durch Lager- und Vermahlungstemperaturen unter -18°C der eingestellte Mahlgrad mit einer geringeren Streuung der Partikelgröße besser erreicht werden. Ferner kann die beabsichtigte Geschmacksbeeinflussung durch den Mahlgrad präziser ermöglicht werden.

Ferner wird vorgeschlagen, dass die Kühleinheit und die Feuchtigkeitseinheit zumindest teilweise einstückig ausgebildet sind. Insbesondere weist die Kühleinheit einen Verdampfer und/oder einen Kondenser auf. Insbesondere bildet der Kondenser und/oder der Verdampfer zumindest teilweise die Feuchtigkeitseinheit. Vorteilhaft ist der Kondenser in zumindest einem Betriebszustand dazu vorgesehen, einen Wassergehalt im Aufnahmeraum, insbesondere in der Gasatmosphäre zu verringern. Insbesondere kann der Verdampfer in zumindest einem weiteren Betriebszustand dazu vorgesehen sein, einen Wassergehalt im Aufnahmeraum, insbesondere in der Gasatmosphäre, zu erhöhen. Hierdurch kann vorteilhaft ein Kostenaufwand gesenkt werden.

Weiterhin wird vorgeschlagen, dass die Aufbereitungseinheit zumindest eine Überdruckeinheit aufweist, welche dazu vorgesehen ist, die Gasatmosphäre mit einem Überdruck bereitzustellen. Unter einem "Überdruck" soll hier insbesondere ein Druck verstanden werden, welcher insbesondere zumindest 110.000 Pa, vorteilhaft zumindest 150.000 Pa, besonders vorteilhaft zumindest 200.000 Pa und besonders bevorzugt zumindest 250.000 Pa beträgt. Vorteilhaft weist die Überdruckeinheit zur Erzeugung eines Überdrucks zumindest ein Überdruckvorratselement auf, welches insbesondere dazu vorgesehen ist, ein Gas, insbesondere ein inertes Gas, für einen Überdruck bereitzustellen. Insbesondere weist der Lebensmittelaufbewahrungsbehälter zumindest ein Verschlusselement auf, welches insbesondere dazu vorgesehen ist, das Lebensmittel portionsweise freizugeben. Insbesondere ist das Verschlusselement dazu vorgesehen, insbesondere in einem gekoppelten Betriebszustand mit der Lebensmittelzubereitungseinheit, das Lebensmittel portionsweise freizugeben. Insbesondere ist der Überdruck dazu vorgesehen, ein Einströmen der Umgebungsluft durch das Verschlusselement zumindest im Wesentlichen zu verhindern. Unter "zumindest im Wesentlichen verhindern" soll hier insbesondere verstanden werden, dass nach einem Betätigen des Verschlusselements ein Anteil der Umgebungsluft, insbesondere im Vergleich zur Gasatmosphäre, in dem Aufnahmeraum insbesondere maximal 10%, vorzugsweise höchstens 5%, vorteilhaft maximal 2%, besonders vorteilhaft höchstens 1 % und besonders bevorzugt maximal 0,5% beträgt. Hierdurch kann vorteilhaft ein effizientes Entnehmen des Lebensmittels bereitgestellt werden, wobei vorteilhaft eine Gasatmosphäre in dem Aufnahmeraum zumindest im Wesentlichen erhalten bleibt. Ferner kann vorteilhaft eine Energieeffizienz weiter gesteigert werden, da ein Aufbereiten der Gasatmosphäre, insbesondere nach einem Entnehmen des Lebensmittels, verringert wird.

Weiterhin wird vorgeschlagen, dass der Lebensmittelaufbewahrungsbehälter zumindest ein Isolierelement zur thermischen Isolierung des Aufnahmeraums aufweist. Insbesondere ist das Isolierelement dazu vorgesehen, eine Temperatur, welche die Kühleinheit bereitstellt, zumindest im Wesentlichen im Aufnahmeraum des Lebensmittelaufbewahrungsbehälters zu halten. Vorteilhaft ist das Isolierelement dazu vorgesehen, den Lebensmittelaufbewahrungsbehälter gegenüber einem Temperatureinfluss einer Brüheinheit zu isolieren. Hierdurch kann vorteilhaft eine Effizienz, insbesondere beim Kühlen, weiter gesteigert werden. Ferner kann vorteilhaft eine qualitätserhaltende Lagerung und ein Brühprozess in einer Kaffeemaschine erreicht werden.

Vorteilhaft weist der Lebensmittelaufbewahrungsbehälter zumindest ein Abdichtelement zur Abdichtung des Aufnahmeraums auf. Unter einem "Abdichtelement" soll insbesondere ein Element verstanden werden, welches dazu vorgesehen ist, den Aufnahmeraum wasserdampfdicht und/oder gasundurchlässig und/oder druckdicht, insbesondere gegenüber Sauerstoff, abzudichten. Hierdurch kann vorteilhaft eine Effizienz weiter gesteigert werden. Ferner kann vorteilhaft eine optimierte Gasatmosphäre in dem Lebensmittelaufbewahrungsbehälter und insbesondere im Aufnahmeraum erhalten bleiben.

Zudem wird vorgeschlagen, dass das Hausgerätesystem zumindest eine Zuführeinheit aufweist, welche dazu vorgesehen ist, ein von einem Umgebungsluftaustausch zumindest im Wesentlichen freies Zuführen von Lebensmittel in den Aufnahmeraum zu ermöglichen. Hierdurch kann vorteilhaft bereits beim Zuführen des Lebensmittels eine vorteilhafte Gasatmosphäre bereitgestellt werden. Ferner kann bei einem zusätzlichen Zuführen von Lebensmittel, die Gasatmosphäre im Aufnahmeraum vorteilhaft erhalten bleiben.

Ferner geht die Erfindung aus von einem Verfahren zur Lagerung von Lebensmittel in einem Aufnahmeraum eines Lebensmittelaufbewahrungsbehälters eines Hausgerätesystems.

Es wird vorgeschlagen, dass ein Sauerstoffanteil verändert, insbesondere gegenüber einer Umgebungsatmosphäre, reduziert wird.

Durch das erfindungsgemäße Verfahren kann insbesondere erreicht werden, dass eine Qualität und/oder eine Haltbarkeit des Lebensmittels in dem Lebensmittelaufbewahrungsbehälter, insbesondere in dessen Aufnahmeraum, länger erhalten bleibt. Ferner kann vorteilhaft ein Aroma und/oder ein Geschmack des Lebensmittels verbessert werden. Zudem kann vorteilhaft die Lagerung von Kaffee und den eigentlichen Brühprozess qualitätserhaltend in einem Gerät vereint werden. Darüber kann vorteilhaft die beabsichtigte Geschmacksbeeinflussung präziser beeinflusst werden. Ferner kann vorteilhaft eine sekundäre Haltbarkeitsdauer des Lebensmittels verlängert werden. Zudem kann vorteilhaft eine Oxidation des Lebensmittels durch Sauerstoff zumindest im Wesentlichen verhindert werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: zumindest einen Teil eines Hausgerätesystems mit zumindest einer Kaffeemaschine und mit einem Lebensmittelaufbewahrungsbehälter,
- Fig. 2: den Lebensmittelaufbewahrungsbehälter in einem entkoppelten Zustand und
- Fig. 3: ein Teil des Hausgerätesystems mit dem Lebensmittelaufbewahrungsbehälter und einer Aufbereitungseinheit, welche eine Kühleinheit und eine Atmosphäreneinheit aufweist.

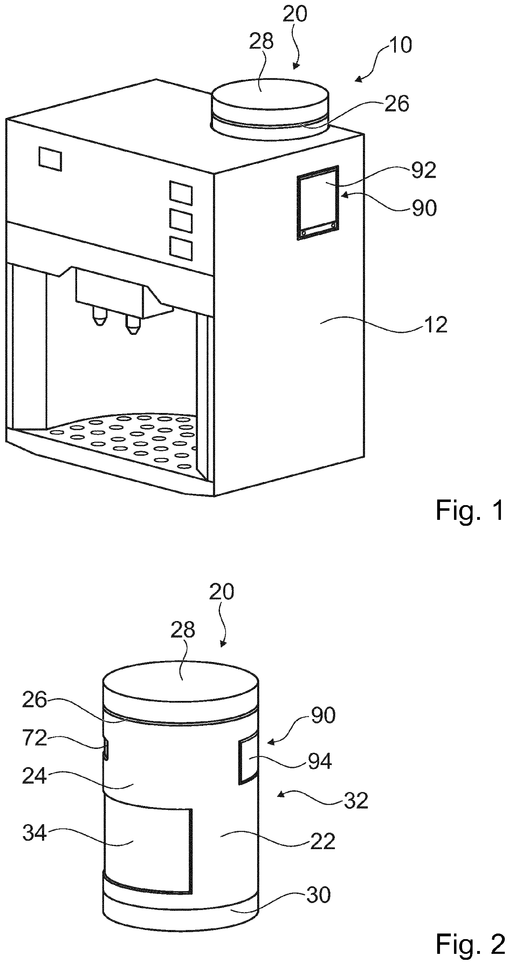

Figur 1 zeigt zumindest ein Teil eines Hausgerätesystems mit zumindest einer Kaffeemaschine 10 in einer isometrischen Darstellung. Die Kaffeemaschine 10 ist als Kaffeevollautomat ausgebildet. Die Kaffeemaschine 10 weist zumindest einen Lebensmittelaufbewahrungsbehälter 20 auf. Die Kaffeemaschine 10 weist zumindest eine Kaffeezubereitungseinheit 12 auf. Die Kaffeezubereitungseinheit 12 ist dazu vorgesehen, Kaffeegetränke zumindest teilweise zuzubereiten. Der Lebensmittelaufbewahrungsbehälter 20 ist mit der Kaffeezubereitungseinheit 12 gekoppelt. Der Lebensmittelaufbewahrungsbehälter 20 ist mit der Kaffeezubereitungseinheit 12 lösbar gekoppelt. Der Lebensmittelaufbewahrungsbehälter 20 ist zumindest dazu vorgesehen, Kaffee in gemahlener Form und/oder in Form von Kaffeebohnen aufzubewahren. Der Lebensmittelaufbewahrungsbehälter 20 weist zumindest einen Aufnahmeraum 22 auf, in welchem der Kaffee angeordnet ist.

Die Kaffeemaschine 10 weist zumindest eine Zuführeinheit 90 auf. Die Zuführeinheit 90 ist dazu vorgesehen, ein von einem Umgebungsluftaustausch zumindest im Wesentlichen freies Zuführen von Kaffee zu ermöglichen. Die Zuführeinheit 90 führt den Kaffee dem Aufnahmeraum 22 zu. Die Zuführeinheit 90 stellt eine im Wesentlichen sauerstofffreie Zuführung des Kaffees bereit. Die Zuführeinheit 90 stellt eine luftfeuchtigkeitsfreie Zuführung des Kaffees bereit. Die Zuführeinheit 90 weist zumindest ein Zuführelement 92 auf. Das Zuführelement 92 ist mit der Kaffeezubereitungseinheit 12 einstückig verbunden. Das Zuführelement 92 ermöglicht ein von einem Umgebungsluftaustausch zumindest im Wesentlichen freies Zuführen. Das Zuführelement 92 ist, bei einem Zuführen von Kaffee, mit zumindest einem korrespondierenden Zuführelement gekoppelt. Die Zuführeinheit 90 weist ein weiteres Zuführelement 94 auf (vgl. Fig. 2). Das weitere Zuführelement 94 ist einstückig mit dem Lebensmittelaufbewahrungsbehälter 20 verbunden. Das weitere Zuführelement 94 ist zu einer direkten Aufnahme des Kaffees vorgesehen.

Figur 2 zeigt den Lebensmittelaufbewahrungsbehälter 20 in einem entkoppelten Zustand. Der Lebensmittelaufbewahrungsbehälter 20 ist wiederauffüllbar. Der Lebensmittelaufbewahrungsbehälter 20 weist zumindest ein Deckelelement 28 auf. Das Deckelelement 28 ist dazu vorgesehen, ein Zuführen des Kaffees zu ermöglichen. Das Deckelelement 28 ist zusätzlich zur Zuführeinheit 90 dazu vorgesehen, den Kaffee dem Aufnahmeraum 22 zuzuführen. Das Deckelelement 28 ist dazu vorgesehen, ein Zuführen eines Kaffees zu ermöglichen, wobei ein Umgebungsluftaustausch erfolgt. Der Lebensmittelaufbewahrungsbehälter 20 weist zumindest einen Behältergrundkörper 32 auf. Der Lebensmittelaufbewahrungsbehälter 20 weist zumindest ein Abdichtelement 26 auf. Das Abdichtelement 26 ist dazu vorgesehen, den Behältergrundkörper 32 gegenüber dem Deckelelement 28 abzudichten. Das Abdichtelement 26 ist dazu vorgesehen, den Lebensmittelaufbewahrungsbehälter 20 zumindest im Wesentlichen gasundurchlässig abzudichten. Das Abdichtelement 26 ist dazu vorgesehen, den Lebensmittelaufbewahrungsbehälter 20 zumindest im Wesentlichen wasserdampfdicht abzudichten. Das Abdichtelement 26 ist dazu vorgesehen, den Lebensmittelaufbewahrungsbehälter 20 zumindest im Wesentlichen druckdicht abzudichten. Das Abdichtelement 26 ist dazu vorgesehen, ein Entweichen der Gasatmosphäre zumindest im Wesentlichen zu vermeiden. Das Abdichtelement 26 ist als Dichtring ausgebildet. Der Dichtring ist zumindest im Wesentlichen aus einem Elastomer gebildet.

Der Kaffeeaufbewahrungsbehälter 20 weist zumindest ein Verschlusselement 30 auf. Das Verschlusselement 30 ist als Portionierverschluss ausgebildet. Das Verschlusselement 30 ist dazu vorgesehen, den Kaffee portionsweise freizugeben. Das Verschlusselement 30 gibt portionsweise Kaffeebohnen und/oder Kaffeepulver aus. Insbesondere ist das Verschlusselement 30 dazu vorgesehen, ein möglich präzises Entnehmen des Lebensmittels bereitzustellen. Das Verschlusselement 30 ist mit der Kaffeezubereitungseinheit 12 gekoppelt. Die Kaffeezubereitungseinheit 12 weist zumindest eine Mahleinheit auf. Die Mahleinheit ist zumindest teilweise mit dem Verschlusselement 30 gekoppelt.

Der Lebensmittelaufbewahrungsbehälter 20 weist zumindest ein Isolierelement 24 auf. Das Isolierelement 24 ist zur thermischen Isolierung des Aufnahmeraums 22 vorgesehen. Das Isolierelement 24 ist dazu vorgesehen, den Lebensmittelaufbewahrungsbehälter 20 gegenüber einer Temperatur der Kaffeezubereitungseinheit 12 zu isolieren. Das Isolierelement 24 ist dazu vorgesehen, den Lebensmittelaufbewahrungsbehälter 20 gegenüber einer Temperatur der Brüheinheit zumindest im Wesentlichen zu isolieren. Der Lebensmittelaufbewahrungsbehälter 20 weist zumindest einen Kühlbereich 34 auf. Der Kühlbereich 34 stellt einen thermischen Durchfluss bereit. Der Bereich ist zu einer Kopplung mit einer Kühleinheit 60 vorgesehen.

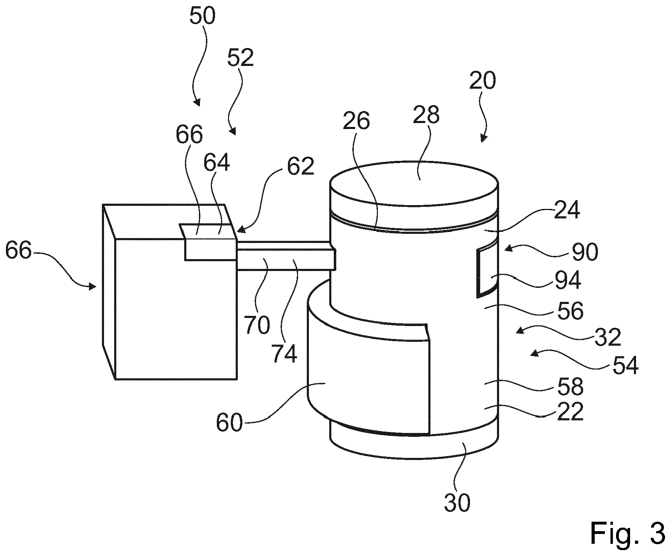

Figur 3 zeigt einen Teil der Kaffeemaschine mit dem Lebensmittelaufbewahrungsbehälter 20 und einer Aufbereitungseinheit 50 in einer stark vereinfachten Darstellung.

Die Kaffeemaschine 10 weist die Aufbereitungseinheit 50 auf. Die Aufbereitungseinheit 50 ist mit der Kaffeezubereitungseinheit 12 verbunden. Die Aufbereitungseinheit 50 ist zumindest teilweise in der Kaffeezubereitungseinheit 12 angeordnet. Die Kaffeezubereitungseinheit 12 ist zur Darstellung der Aufbereitungseinheit 50 nicht gezeigt. Der Lebensmittelaufbewahrungsbehälter 20 ist mit der Aufbereitungseinheit 50 gekoppelt. Der Lebensmittelaufbewahrungsbehälter 20 ist mit der Aufbereitungseinheit 50 lösbar gekoppelt.

Die Aufbereitungseinheit 50 ist zumindest dazu vorgesehen, einen Zustandsparameter des Aufnahmeraums 22 zu beeinflussen. Die Aufbereitungseinheit 50 ist dazu vorgesehen, eine Gasatmosphäre in dem Aufnahmeraum 22 aufzubereiten.

Die Aufbereitungseinheit 50 weist zumindest die Kühleinheit 60 auf. Die Kühleinheit 60 ist dazu vorgesehen, den Aufnahmeraum 22 zu kühlen. Die Kühleinheit 60 ist dazu vorgesehen, den Lebensmittelaufbewahrungsbehälter 20 zu kühlen. Die Kühleinheit 60 ist dazu vorgesehen, Gefriertemperaturen bereitzustellen. Die Kühleinheit 60 ist dazu vorgesehen, eine Temperatur von maximal -18°C dem Aufnahmeraum 22 bereitzustellt. Die Kühleinheit 60 ist mit dem Kühlbereich 34 in zumindest einem Betriebszustand gekoppelt.

Die Aufbereitungseinheit 50 weist zumindest eine Atmosphäreneinheit 52 auf. Die Atmosphäreneinheit 52 weist zumindest ein Koppelelement 70 auf. Das Koppelelement 70 ist dazu vorgesehen, die Atmosphäreneinheit 52 mit dem Lebensmittelaufbewahrungsbehälter 20 zu koppeln. Der Lebensmittelaufbewahrungsbehälter 20 weist ein Gegenkoppelement 72 auf (vgl. Figur 3). Das Gegenkoppelelement 72 ist in zumindest einem Betriebszustand mit dem Koppelelement 70 verbunden. Das Koppelelement 70 weist zumindest einen Strömungskanal 74 auf. Der Strömungskanal 74 ist dazu vorgesehen, die Atmosphäreneinheit 52 mit dem Aufnahmeraum 22 zu verbinden. Der Strömungskanal 74 ist dazu vorgesehen, ein Zuführen und/oder Entnehmen der Gasatmosphäre bereitzustellen.

Die Atmosphäreneinheit 50 ist dazu vorgesehen, einen Anteil und/oder eine Komponente der Gasatmosphäre zu erhöhen. Die Atmosphäre ist dazu vorgesehen, einen Anteil und/oder eine Komponente der Gasatmosphäre zu verringern. Die Atmosphäreneinheit 52 ist dazu vorgesehen, einen Sauerstoffanteil in dem Aufnahmeraum 22 zu verändern. Die Atmosphäreneinheit 52 weist zumindest eine Gaskompositionseinheit 68 auf. Die Gaskompositionseinheit 68 ist dazu vorgesehen, einen Sauerstoffanteil in der Gasatmosphäre zu verändern. Die Gaskompositionseinheit 68 weist zumindest ein Vorratselement 66 auf. Das Vorratselement 66 weist zumindest ein Gas auf. Das Vorratselement 66 weist ein inertes Gas auf. Das inerte Gas ist Stickstoff. Das Vorratselement 66 ist dazu vorgesehen, das inerte Gas dem Aufnahmeraum 22 zuzuführen.

Alternativ oder zusätzlich weist die Gaskompositionseinheit 68 zumindest eine Elektrolyseeinheit auf. Die Elektrolyseeinheit ist dazu vorgesehen, zumindest einen Sauerstoffanteil in dem Aufnahmeraum 22 zu verändern. Die Elektrolyseeinheit weist eine Kathode auf. Die Elektrolyseeinheit weist eine Anode auf. Die Anode ist dazu vorgesehen, Sauerstoff herzustellen. Die Kathode ist dazu vorgesehen, bestehenden Sauerstoff bei einem Kontakt mit der Kathode zu reduzieren. Der Sauerstoff geht bei einer Elektrodenreaktion mit der Kathode zumindest im Wesentlichen verloren. In zumindest einem Betriebszustand ist die Elektrolyseeinheit dazu vorgesehen, einen Sauerstoffanteil in der Gasatmosphäre, mittels der Kathode, zu reduzieren. In zumindest einem weiteren Betriebszustand ist die Gaskompositionseinheit 68 dazu vorgesehen, einen Sauerstoffanteil in der Gasatmosphäre zu erhöhen. Die Anode ist in dem weiteren Betriebszustand dazu vorgesehen, einen Sauerstoffanteil in der Gasatmosphäre zu erhöhen.

Alternativ oder zusätzlich weist die Gaskompositionseinheit 68 zumindest einen Membranen-Filter auf. Der Membranen-Filter ist dazu vorgesehen, die Gasatmosphäre zumindest teilweise zu filtern. Der Membranen-Filter ist dazu vorgesehen, einen Sauerstoffgehalt zu reduzieren.

Die Atmosphäreneinheit 52 ist dazu vorgesehen, einen Wassergehalt in dem Aufnahmeraum 22 zu beeinflussen. Die Atmosphäreneinheit 52 weist zumindest eine Feuchtigkeitseinheit 54 auf. Die Feuchtigkeitseinheit 54 ist dazu vorgesehen, einen Wassergehalt im Aufnahmeraum 22 zu beeinflussen. Die Feuchtigkeitseinheit 54 und der Lebensmittelaufbewahrungsbehälter 20 sind zumindest teilweise einstückig ausgebildet. Die Feuchtigkeitseinheit 54 ist zumindest teilweise einstückig mit dem Behältergrundkörper 32 ausgebildet. Die Feuchtigkeitseinheit 54 ist auf einer dem Aufnahmeraum 22 zugewandten Seite angeordnet.

Die Feuchtigkeitseinheit 54 weist zumindest ein Entfeuchtungselement 56 auf. Das Entfeuchtungselement 56 besteht wenigstens teilweise aus einem hygroskopischen Material 58. Das Entfeuchtungselement 56 ist zu einer Reduzierung des Wassergehalts im Aufnahmeraum 22 vorgesehen. Das Entfeuchtungselement 56 ist dazu vorgesehen, einen Wassergehalt zu reduzieren. Das Entfeuchtungselement 56 ist dazu vorgesehen, einen Wassergehalt der Gasatmosphäre zu reduzieren. Das hygroskopische Material 58 bildet zumindest teilweise den Behältergrundkörper 32. Das hygroskopische Material 58 ist dazu vorgesehen, einen Wassergehalt zumindest im Wesentlichen zu binden. Das hygroskopische Material 58 ist dazu vorgesehen, den Wassergehalt im Aufnahmeraum 22 passiv zu reduzieren.

Alternativ sind die Kühleinheit 60 und die Feuchtigkeitseinheit 54 zumindest teilweise einstückig ausgebildet. Die Kühleinheit 60 weist zum Kühlen einen Verdampfer auf (nicht dargestellt). Die Kühleinheit 60 weist zum Kühlen zumindest einen Kondenser auf (nicht dargestellt). Die Feuchtigkeitseinheit 54 ist zumindest teilweise einstückig mit dem Kondenser ausgebildet. Der Kondenser ist in zumindest einem Betriebszustand dazu vorgesehen, einen Wassergehalt in dem Aufnahmeraum 22 zu reduzieren. Die Feuchtigkeitseinheit 54 ist zumindest teilweise einstückig mit dem Verdampfer ausgebildet. In zumindest einem weiteren Betriebszustand ist der Verdampfer dazu vorgesehen, einen Wassergehalt in der Gasatmosphäre zu erhöhen. In zumindest einer Alternative ist die Feuchtigkeitseinheit 54 dazu vorgesehen, das beim Reduzieren des Wassergehalts entstehende Wasser, der Elektrolyseeinheit zuzuführen. Das entstehende Wasser wird der Anode zugeführt.

Die Atmosphäreneinheit 52 weist zumindest eine Überdruckeinheit 62 auf. Die Überdruckeinheit 62 ist dazu vorgesehen, die Gasatmosphäre mit einem Überdruck bereitzustellen. Die Überdruckeinheit 62 weist zumindest ein Überdruckvorratselement 64 auf. Das Überdruckvorratselement 64 weist ein inertes Gas auf. Das Überdruckvorratselement 64 ist einteilig mit dem Vorratselement 66 der Gaskompositionseinheit 68 ausgebildet. Das Überdruckvorratselement 64 ist dazu vorgesehen, mittels eines Einstroms des weiteren Gases, einen Überdruck im Aufnahmeraum 22 zu erzeugen. Der Überdruck ist dazu vorgesehen, ein Einströmen der Umgebungsatmosphäre durch das Verschlusselement 30 zumindest im Wesentlichen zu verhindern. Das Verschlusselement 30 ist in Kombination mit der Überdruckeinheit 62 dazu vorgesehen, eine Kondensation im Aufnahmeraum 22 bei einer Entnahme des Lebensmittels zu vermeiden.

Die Kaffeemaschine 10 führt in zumindest einem Betriebszustand ein Verfahren zur Lagerung von Kaffee in dem Aufnahmeraum 22 des Lebensmittelaufbewahrungsbehälters 20 durch. In zumindest einem Verfahrensschritt wird der Kaffee dem Aufnahmeraum 22 zugeführt. Der Kaffee wird über die Zuführeinheit 90 dem Aufnahmeraum 22 zugeführt. Der Kaffee wird sauerstofffrei in den Lebensmittelaufbewahrungsbehälter 20 geführt. Der Kaffee wird luftfeuchtigkeitsfrei dem Lebensmittelaufbewahrungsbehälter 20 zugeführt. Eine Zustandsgröße des Aufnahmeraums 22 wird beeinflusst. Eine Zustandsgröße wird mittels einer Aufbereitungseinheit 50 beeinflusst. Ein Sauerstoffanteil wird verändert. Ein Sauerstoffanteil wird mittels der Atmosphäreneinheit 52 verändert. Ein Sauerstoffanteil wird in dem Aufnahmeraum 22 verändert. Ein Wassergehalt wird verändert. Ein Wassergehalt wird mittels der Feuchtigkeitseinheit 54 verändert. Ein Wassergehalt wird in dem Aufnahmeraum 22 verändert. Der Lebensmittelaufbewahrungsbehälter 20 wird gekühlt. Der Lebensmittelaufbewahrungsbehälter 20 wird mittels der Kühleinheit 60 gekühlt.

### Bezugszeichen

- 10: Kaffeemaschine
- 12: Kaffeezubereitungseinheit
- 20: Lebensmittelaufbewahrungsbehälter
- 22: Aufnahmeraum
- 24: Isolierelement
- 26: Abdichtelement
- 28: Deckelelement
- 30: Verschlusselement
- 32: Behältergrundkörper
- 34: Kühlbereich
- 50: Aufbereitungseinheit
- 52: Atmosphäreneinheit
- 54: Feuchtigkeitseinheit
- 56: Entfeuchtungselement
- 58: Hygroskopisches Material
- 60: Kühleinheit
- 62: Überdruckeinheit
- 64: Überdruckvorratselement
- 66: Vorratselement
- 68: Gaskompositionseinheit
- 70: Koppelelement
- 72: Gegenkoppelelement
- 74: Strömungskanal
- 90: Zuführeinheit
- 92: Zuführelement
- 94: Zuführelement

## Patentansprüche

1. Hausgerätesystem, insbesondere Kaffeemaschine (10), mit zumindest einem Lebensmittelaufbewahrungsbehälter (20), welcher wenigstens einen Aufnahmeraum (22) für zumindest ein Lebensmittel definiert und welcher in zumindest einem Betriebszustand zu einer Abgabe zumindest eines Teils des Lebensmittels an eine Lebensmittelzubereitungseinheit vorgesehen ist, und mit zumindest einer Aufbereitungseinheit (50), welche dazu vorgesehen ist, zumindest einen Zustandsparameter des Aufnahmeraums (22) zu beeinflussen, **dadurch gekennzeichnet, dass** die Aufbereitungseinheit (50) zumindest eine Atmosphäreneinheit (52) aufweist, welche dazu vorgesehen ist, einen Sauerstoffanteil in dem Aufnahmeraum (22) zu verändern.

2. Hausgerätesystem (10) nach Anspruch 1, **dadurch gekennzeichnet, dass** die Atmosphäreneinheit (52) zumindest eine Feuchtigkeitseinheit (54) aufweist, welche dazu vorgesehen ist, einen Wassergehalt im Aufnahmeraum (22) zu beeinflussen.

3. Hausgerätesystem (10) nach Anspruch 2, **dadurch gekennzeichnet, dass** die Feuchtigkeitseinheit (54) und der Lebensmittelaufbewahrungsbehälter (20) zumindest teilweise einstückig ausgebildet sind.

4. Hausgerätesystem (10) nach Anspruch 2 oder 3, **dadurch gekennzeichnet, dass** die Feuchtigkeitseinheit (54) zumindest ein Entfeuchtungselement (56) aufweist, welches wenigstens teilweise aus einem hygroskopischen Material (58) besteht und zu einer Reduzierung des Wassergehalts im Aufnahmeraum (22) vorgesehen ist.

5. Hausgerätesystem (10) nach einem der vorhergehenden Ansprüche, **dadurch gekennzeichnet, dass** die Aufbereitungseinheit (50) zumindest eine Kühleinheit (60) aufweist, welche dazu vorgesehen ist, den Aufnahmeraum (22) zu kühlen.

6. Hausgerätesystem (10) nach Anspruch 5, **dadurch gekennzeichnet, dass** die Kühleinheit (60) und die Feuchtigkeitseinheit (54) zumindest teilweise einstückig ausgebildet sind.

7. Hausgerätesystem (10) nach einem der vorhergehenden Ansprüche, **dadurch gekennzeichnet, dass** die Atmosphäreneinheit (52) zumindest eine Überdruckeinheit (62) aufweist, welche dazu vorgesehen ist, die Gasatmosphäre mit einem Überdruck bereitzustellen.

8. Hausgerätesystem (10) nach einem der vorhergehenden Ansprüche, **dadurch gekennzeichnet, dass** der Lebensmittelaufbewahrungsbehälter (20) zumindest ein Isolierelement (24) zur thermischen Isolierung des Aufnahmeraums (22) aufweist.

9. Hausgerätesystem (10) nach einem der vorhergehenden Ansprüche, **dadurch gekennzeichnet, dass** der Lebensmittelaufbewahrungsbehälter (20) zumindest ein Abdichtelement (26) zur Abdichtung des Aufnahmeraums (22) aufweist.

10. Hausgerätesystem (10) nach einem der vorhergehenden Ansprüche, **gekennzeichnet durch** zumindest eine Zuführeinheit (90), welche dazu vorgesehen ist, ein von einem Umgebungsluftaustausch zumindest im Wesentlichen freies Zuführen des Lebensmittels in den Aufnahmeraum (22) zu ermöglichen.

11. Verfahren zur Lagerung von zumindest einem Lebensmittel in einem Aufnahmeraum (22) eines Lebensmittelaufbewahrungsbehälters (20) eines Hausgerätesystems (10), insbesondere nach einem der vorhergehenden Ansprüche, **dadurch gekennzeichnet, dass** ein Sauerstoffanteil verändert wird.
